# EUROPEAN PATENT APPLICATION

(11) **EP 1 479 899 A2**
(43) Date of publication of application: **24.11.2004**
(21) Application number: 04011993.5
(22) Date of filing: 19.05.2004
(51) Int. Cl.: F02D 41/38

(54) **Combustion control apparatus and method for internal combustion engine**

(30) Priority: 21.05.2003 JP 2003143121
(71) Applicant: TOYOTA JIDOSHA KABUSHIKI KAISHA, Toyota-shi, Aichi-ken 471-8571 (JP); Kabushiki Kaisha Toyota Jidoshokki, Kariya-shi, Aichi-ken (JP)
(72) Inventor: Sugiyama, Tatsumasa, Toyota-shi Aichi-ken, 471-8571 (JP); Tsuzuki, Masato, Toyota-shi Aichi-ken, 471-8571 (JP); Ishikawa, Masahiko, Toyota-shi Aichi-ken, 471-8571 (JP); Kobayashi, Nobuki, Toyota-shi Aichi-ken, 471-8571 (JP); Tahara, Jun, Toyota-shi Aichi-ken, 471-8571 (JP); Kato, Hidenaga, Kariya-shi Aichi-ken (JP)
(74) Representative: Leson, Thomas Johannes Alois, Dipl.-Ing.

(57) **Abstract**

In an internal combustion engine capable of selectively switching between a low temperature combustion state and an ordinary combustion state, a combustion control apparatus can suppress an amount of smoke emitted from the engine to the ambient atmosphere, and at the same time provide acceleration performance to better meet driver's requirements. The apparatus includes a map unit for calculating a maximum fuel injection amount, which is an upper limit for the amount of fuel being able to be injected into a combustion chamber, and the map unit comprises a low temperature combustion map used at the time of low temperature combustion and an ordinary combustion map used at the time of ordinary combustion, these maps being provided separately from each other.

## Description

### BACKGROUND OF THE INVENTION

### 1. Field of the Invention

The present invention relates to a combustion control apparatus and method for an internal combustion engine for controlling the combustion state of an air fuel mixture in a combustion chamber.

### 2. Description of the Related Art

In internal combustion engines, an amount of fuel to be injected into a combustion chamber is calculated from the number of revolutions of the engine, a required load and the like, and if the amount of fuel to be injected (hereinafter also referred to as "the amount of injection fuel") becomes excessive, the amount of generation of soot and unburnt components increases so that the amount of smoke discharged or emitted from the engine to the ambient atmosphere will exceed an allowable smoke range. Therefore, a maximum amount of fuel to be injected, which is an upper limit for the amount of fuel capable of being injected into the combustion chamber, is set so that the amount of smoke discharged or emitted from the engine falls within the allowable smoke range, and hence the amount of fuel actually injected into the combustion chamber is controlled to be less than or equal to an allowable range.

On the other hand, for the purpose of reducing the amount of discharge or emission of NOx and soot, there have been developed internal combustion engines that can selectively switch between a low temperature combustion state, in which the generation of soot is suppressed by increasing the amount of burnt gas components in the combustion chamber more than the amount of burnt gas components at the time when the amount of soot generated becomes a maximum due to the burnt gas components in the combustion chamber being increased, and an ordinary combustion state, which is other than the low temperature combustion state.

As such an internal combustion engine, there is known one in which when the internal combustion engine is operated in a low temperature combustion state, the amount of intake gases (i.e., the amount of intake air and the amount of burnt gases supplied to the combustion chamber) is controlled based on the required load and the number of revolutions of the engine so as to regulate the engine torque with a high proportion of burnt gases in the combustion chamber and with a small amount of air, whereas when the internal combustion engine is operated in the ordinary combustion state, the amount of fuel to be injected is controlled based on the required load and the number of revolutions of the engine so as to regulate the engine torque with an excessive amount of air in the combustion chamber (for example, see Japanese patent No. 3341683 (corresponding to EP99113774.6 and US6209515).

In this connection, note that there are following documents that are relevant to the present invention.

Japanese patent No. 3331974 (corresponding to EP99113774.6 and US6209515).

Even in internal combustion engines that selectively switch between the low temperature combustion state and the ordinary combustion state, however, it is necessary to set the maximum amount of fuel to be injected (hereinafter also referred to as "maximum fuel injection amount") so as to make the amount of discharged or emitted smoke to be in the allowable smoke range. However, since the generation of soot is suppressed in the low temperature combustion state, when the amount of intake air and the amount of injection fuel supplied to the combustion chamber in this state are the same as those at the ordinary combustion state, the amount of smoke discharged or emitted at the time of the low temperature combustion is less than that at the time of the ordinary combustion. Therefore, in the internal combustion engines that selectively switch between the low temperature combustion state and the ordinary combustion state as stated above, when the maximum fuel injection amounts at the times of the low temperature combustion and the ordinary combustion are set to the same value, the amount of fuel to be injected into the combustion chamber at the time of the low temperature combustion is limited to an amount which is less than a fuel injection amount with which the amount of smoke emitted becomes an upper limit of the allowable smoke range, for example, even if the maximum fuel injection amount is set to a fuel injection amount with which the amount of smoke emitted at the time of the ordinary combustion becomes the upper limit of the allowable smoke range. Accordingly, there is a fear that the acceleration performance of a vehicle, on which such an internal combustion engine is installed, during the low temperature combustion might be impaired. In addition, in cases where the maximum fuel injection amount is not set at the time of the low temperature combustion in view of the above reason, the air fuel ratio of a mixture in the combustion chamber becomes excessively rich when the amount of fuel injected into the combustion chamber is rapidly increased upon acceleration of the vehicle or the like, thus giving rise to a fear that misfiring might be caused, suddenly increasing the amount of smoke emitted to the atmosphere.

### SUMMARY OF THE INVENTION

Accordingly, the present invention is intended to provide a technique which is capable of suppressing the amount of smoke to be discharged or emitted to the ambient atmosphere as well as providing acceleration performance to better meet driver's requirements in an internal combustion engine that can selectively switch between a low temperature combustion state and an ordinary combustion state.

In order to solve the above-mentioned problems, the present invention adopts the following solution. That is, the present invention adjusts a maximum fuel injection amount, which is an upper limit for the amount of fuel being able to be injected into the combustion chamber, to be different values at the time of low temperature combustion and at the time of ordinary combustion, respectively, in an internal combustion engine that selectively switches between a low temperature combustion state and an ordinary combustion state.

More specifically, according to one aspect of the present invention, there is provided a combustion control apparatus for an internal combustion engine in which a low temperature combustion state, in which the generation of soot is suppressed by increasing an amount of burnt gas components in the combustion chamber of the engine more than that at the time when an amount of soot generated becomes a maximum due to the burnt gas components in the combustion chamber being increased, and an ordinary combustion state, which is other than the low temperature combustion state, can be selectively switched. The combustion control apparatus comprises: a fuel injection amount control part that controls an amount of injection fuel to be injected into the combustion chamber; and a maximum fuel injection amount setting part that sets a maximum fuel injection amount, which is an upper limit for the amount of injection fuel controlled by the fuel injection amount control part in such a manner that an amount of smoke to be emitted from the engine falls within an allowable range; wherein the maximum fuel injection amount setting part sets the maximum fuel injection amount to be different values at the time of low temperature combustion and at the time of ordinary combustion, respectively.

The amounts of smoke emitted from the engine to the ambient atmosphere at the times of low temperature combustion and ordinary combustion are different from each other even if the amounts of fuel injected into the combustion chamber at these times are the same. That is, the amounts of fuel injected into the combustion chamber, for which the amount of smoke emitted from the engine falls within the allowable range, are different from each other at the times of low temperature combustion and ordinary combustion.

Accordingly, in the present invention, the maximum fuel injection amount, which is an upper limit for the amount of fuel being able to be injected into the combustion chamber, is set to amounts of injection fuel corresponding to the respective combustion states, whereby it is possible to inject as much fuel as possible into the combustion chamber while preventing the injection of an excessive amount of fuel into the combustion chamber. As a result, the respective combustion states can be made more suitable, so it is possible not only to suppress the amount of smoke emitted from the engine, but also to provide acceleration performance capable of better meeting driver's requirements.

In addition, when the amount of intake air and the amount of injection fuel supplied to the combustion chamber are the same at the times of low temperature combustion and ordinary combustion, as stated above, the amount of smoke emitted from the engine at the time of the low temperature combustion is less than that at the time of the ordinary combustion. That is, it is possible to inject a greater amount of fuel into the combustion chamber at the time of the low temperature combustion than that at the time of the ordinary combustion while keeping the amount of smoke emitted within the allowable range.

Accordingly, it is preferred that when the amount of intake air supplied to the combustion chamber is the same at the times of low temperature combustion and ordinary combustion, the maximum fuel injection amount be set greater at the time of low temperature combustion than at the time of ordinary combustion.

With such an arrangement, a greater amount of fuel can be injected into the combustion chamber at the time of low temperature combustion. That is, at the time of low temperature combustion, it is possible to improve the acceleration performance of the vehicle while suppressing the discharge or emission of smoke from the engine to the atmosphere.

In the present invention, the maximum fuel injection amount setting part may calculate the maximum fuel injection amount from a map unit based on the number of revolutions of the engine and an amount of intake air supplied to the combustion chamber. This map unit may be formed of the relation among the number of revolutions of the engine, the amount of intake air, and the maximum fuel injection, which have been obtained in advance through experiments or the like.

Further, in this case, it is preferred that the map unit comprises a low temperature combustion map and an ordinary combustion map which are provided separately from each other. By the separate provision of the low temperature combustion map and the ordinary combustion map in this manner, it is possible to calculate appropriate maximum fuel injection amounts corresponding to the respective combustion states.

Preferably, in the present invention, a basic fuel injection amount calculation part is provided for calculating a basic amount of fuel to be injected into the combustion chamber based on the number of revolutions of the engine and the degree of opening of an accelerator pedal. In this case, by making a comparison between the basic fuel injection amount calculated by the basic fuel injection amount calculation part and the maximum fuel injection amount, it is desirable that a smaller one of them be set as an actual fuel injection amount which is an amount of fuel to be actually injected into the combustion chamber.

According to such control, it is always possible to inject as much fuel as possible into the combustion chamber while preventing the injection of an excessive amount of fuel into the combustion chamber.

A diesel engine having a common rail can be exemplified as the internal combustion engine in the present invention.

In addition, the present invention can adopt another solution. That is, according to another aspect of the present invention, there is provided a combustion control method for an internal combustion engine in which a low temperature combustion state, in which the generation of soot is suppressed by increasing an amount of burnt gas components in the combustion chamber of the engine more than that at the time when an amount of soot generated becomes a maximum due to the burnt gas components in the combustion chamber being increased, and an ordinary combustion state, which is other than the low temperature combustion state, can be selectively switched. The method comprises the steps of: calculating a basic amount of fuel to be injected into the combustion chamber based on the number of revolutions of the engine and the degree of opening of an accelerator pedal; determining whether the internal combustion engine is in a low temperature combustion state or in an ordinary combustion state; setting a maximum fuel injection amount, which is an upper limit for the amount of fuel to be injected into the combustion chamber, to be different values at the time of low temperature combustion and at the time of ordinary combustion based on the number of revolutions of the engine and an amount of intake air supplied to the combustion chamber; and making a comparison between the basic fuel injection amount and the maximum fuel injection amount thereby to set a smaller one of them as an actual fuel injection amount which is an amount of fuel to be actually injected into the combustion chamber.

According to the combustion control method of the present invention, the maximum fuel injection amount, which is an upper limit for the amount of fuel being able to be injected into the combustion chamber, is set to appropriate amounts of injection fuel corresponding to the respective combustion states, whereby it is possible to inject as much fuel as possible into the combustion chamber while preventing the injection of an excessive amount of fuel into the combustion chamber.

Accordingly, the respective combustion states can be made more suitable, and hence it is possible not only to suppress the amount of smoke emitted from the engine, but also to provide acceleration performance capable of better meeting driver's requirements.

The above and other objects, features and advantages of the present invention will become more readily apparent to those skilled in the art from the following detailed description of a preferred embodiment of the present invention taken in conjunction with the accompanying drawings.

### BRIEF DESCRIPTION OF THE DRAWINGS

Fig. 1 is a view showing the schematic construction of an internal combustion engine and its combustion control apparatus according to one embodiment of the present invention.
Fig. 2 is a flow chart showing an actual fuel injection amount calculation routine according to the embodiment of the present invention.
Fig. 3 is a view showing the flow of signals around an electronic control unit (ECU) according to the embodiment of the present invention.

### DESCRIPTION OF THE PREFERRED EMBODIMENT

Hereinafter, a preferred embodiment of the present invention will be described in detail while referring to the accompanying drawing. Here, reference will be made to the case where the present invention is applied to a diesel engine.

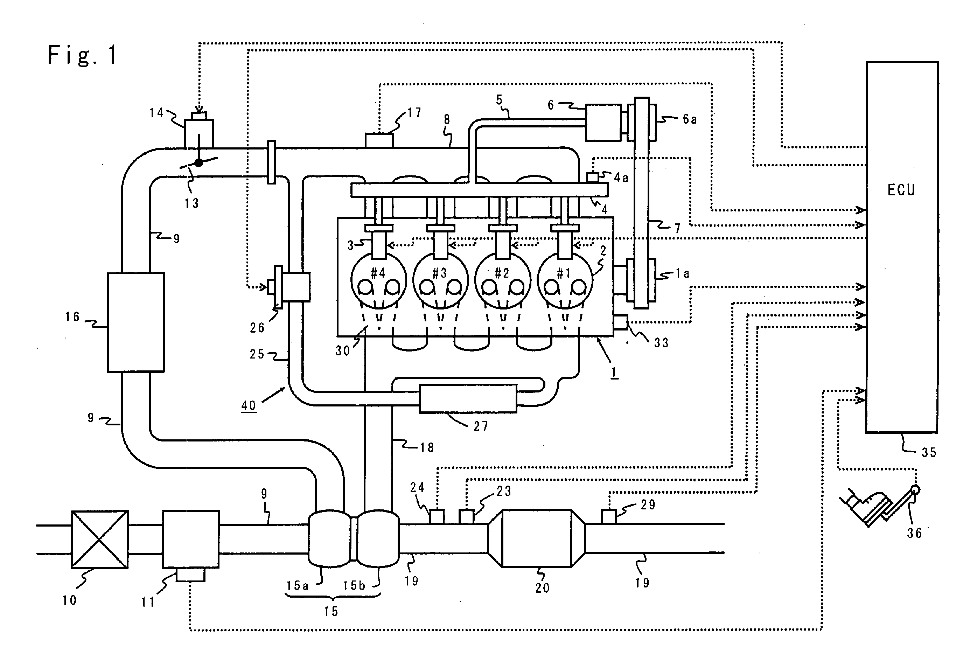

Fig. 1 is a view that shows the schematic construction of an internal combustion engine with a combustion control apparatus according to one embodiment of the present invention.

The internal combustion engine (hereinafter also referred to simply as an engine), generally designated at reference numeral 1 as illustrated in Fig. 1, is a multi-cylinder diesel engine having four cylinders 2. The engine 1 is provided with fuel injection valves 3, one for each cylinder 2, for directly injecting fuel into a combustion chamber of each cylinder 2. The respective fuel injection valves 3 are connected with an accumulator or common rail 4 that serves to accumulate or pressurized up the fuel to a prescribed pressure. A common rail pressure sensor 4a is mounted on the common rail 4 for generating an electric signal corresponding to the pressure of the fuel in the common rail 4.

The common rail 4 is in communication with a fuel pump 6 through a fuel feed pipe 5. The fuel pump 6 is driven to operate by a driving source in the form of the rotational torque of an output shaft or crankshaft of the engine 1, and a pump pulley 6a mounted on an input shaft of the fuel pump 6 is operatively connected through a belt 7 with a crankshaft pulley 1a mounted on the output shaft or crankshaft of the engine 1.

In the fuel injection system as constructed in this manner, the fuel supplied to the common rail 4 by the fuel pump 6 through the fuel feed pipe 5 is accumulated or pressurized up to a predetermined pressure in the common rail 4 and distributed to the fuel injection valves 3 of the respective cylinders 2. Thereafter, when a drive current is applied to the fuel injection valves 3, the fuel injection valves 3 are operated to open so that fuel is injected from the fuel injection valves 3 into the corresponding cylinders 2, respectively.

An intake manifold 8 is connected with the engine or engine proper 1 in such a manner that it is in communication with the combustion chambers of the respective cylinders 2 through intake ports (not illustrated), respectively.

The intake manifold 8 is connected with an intake pipe 9, on which an air cleaner box 10, an air flow meter 11 for generating an electric signal corresponding to the mass of the intake air flowing in the intake pipe 9, a compressor housing 15a of a centrifugal supercharger (turbocharger) 15, an intercooler 16 and a throttle valve 13 are sequentially mounted from an upstream side of the intake pipe 9. A throttle actuator 14 for driving the throttle valve 13 to open and close is mounted on the throttle valve 13, so that the flow rate of the intake air flowing in the intake pipe 9 is adjusted in accordance with the opening or closing movement of the throttle valve 13.

On the other hand, an exhaust manifold 18 is connected with the engine or engine proper 1 in such a manner that it is in communication with the combustion chambers of the respective cylinders 2 through exhaust ports 30, respectively.

The exhaust manifold 18 is connected with the turbine housing 15b of the centrifugal supercharger 15. Also, the turbine housing 15b is connected with an exhaust pipe 19.

An exhaust gas purification catalyst 20 is arranged in the exhaust pipe 19, and an air fuel ratio sensor 23 for generating an electric signal corresponding to the air fuel ratio of the exhaust gas flowing in the exhaust pipe 19 is mounted on the exhaust pipe 19 at a location upstream of the exhaust gas purification catalyst 20. A first exhaust gas temperature sensor 24 and a second exhaust gas temperature sensor 29 are mounted on the exhaust pipe 19 at locations upstream and downstream, respectively, of the exhaust gas purification catalyst 20 for generating output electric signals corresponding to the temperatures of the exhaust gas flowing in the upstream and downstream portions of the exhaust pipe 19, respectively. The exhaust pipe 19 is connected with an unillustrated muffler at the downstream side of the exhaust gas purification catalyst 20.

In addition, an exhaust gas recirculation device 40 is attached to the internal combustion engine 1 for recirculating a part of the exhaust gas flowing in the exhaust system of the internal combustion engine 1 into the intake system. The exhaust gas recirculation device 40 includes an exhaust gas recirculation passage (EGR passage) 25 formed to extend from the exhaust manifold 18 through the interior of cylinder heads to a joint portion of the intake manifold 8, an exhaust gas flow regulation valve (EGR valve ) 26 in the form of an electromagnetic valve or the like for adjusting the flow rate of the exhaust gas flowing in the EGR passage 25 (hereinafter referred to as EGR gas) in proportion to the magnitude of a voltage applied thereto, and an EGR cooler 27 arranged in the EGR passage 25 at a location upstream of the EGR valve 26 for cooling the EGR gas flowing in the EGR passage 25.

In the exhaust gas recirculation device 40 constructed in this manner, when the EGR valve 26 is opened, a part of the exhaust gas flowing in the exhaust manifold 18 passes through the EGR passage 25 and flows into the joint portion of the intake manifold 18 while being cooled by the EGR cooler 27. The EGR gas flowing into the intake manifold 18 forms into an air fuel mixture while being mixed with fresh air coming from the upstream side of the intake manifold 18, and is distributed to the combustion chambers of each cylinder 2.

Here, the EGR gas contains inert gas components, which do not combust or burn on their own and which have heat absorbing or endothermic property as in the case of water (H₂O), carbon dioxide (CO₂) or the like. Therefore, when it is mixed with the air fuel mixture, the combustion temperature of the mixture is lowered, thus suppressing the amount of generation of nitrogen oxides (NOx).

An electronic control unit (ECU) 16 for controlling the engine 1 is provided in conjunction with the engine 1 as constructed in the above manner. This ECU 35 serves to control the operating conditions of the engine 1 in accordance with the operating state of the vehicle and the driver's requirements.

Various kinds of sensors such as the common rail pressure sensor 4a, the airflow meter 11, an intake pipe pressure sensor 17 for sensing the pressure of intake air in the intake pipe 9, the air fuel ratio sensor 23, the first exhaust gas temperature sensor 24, the second exhaust gas temperature sensor 29, a crank position sensor 33 for sensing the rotational angle or position of the crankshaft, an accelerator opening sensor 36 for sensing the degree of opening or depression of an accelerator pedal, etc., are connected to the ECU 35 through electric wiring, so that the output signals of these sensors are input to the ECU 35.

On the other hand, the fuel injection valves 3, the throttle actuator 14, the EGR valve 26 and the like are also connected to the ECU 35 through electric wiring, so that they can be controlled by the ECU 35.

The ECU 35 includes a CPU, a ROM, a RAM and the like, and calculates the number of revolutions of the engine based on time intervals between pulses in the output signal of the crank position sensor 33, for example. Moreover, the ECU 35 calculates the amount of intake air supplied to each combustion chamber based on the output signals of the air flow meter 11 and the intake pipe pressure sensor 17.

Further, the internal combustion engine 1 according to this embodiment operates to selectively switch a low temperature combustion state in which the amount of the generation of soot is suppressed by making, under the control of the exhaust gas recirculation device 40, the amount of the EGR gas (corresponding to the burnt gas components in the present invention) supplied to each combustion chamber greater than an amount of EGR gas at the time when the amount of the generation of soot, which increases in accordance with the increasing amount of the EGR gas supplied to each combustion chamber, becomes a maximum in a state of fuel injection timing, at which fuel is injected into each combustion chamber, being fixed, and an ordinary combustion state which is other than the low temperature combustion state. Such low temperature combustion, being a well-known technique and its detailed description being omitted, is disclosed, for example, in Japanese patent No. 3116876 (corresponding to EP0879946 and US5937639), etc.

Next, reference will be made to the method of determining the amount of the fuel injected into each combustion chamber in the internal combustion engine 1 according to this embodiment.

The ECU 35 calculates a basic amount of fuel injected into each combustion chamber based on the number of revolutions of the engine, the degree of opening or depression of the accelerator pedal detected by the accelerator opening sensor 36, or the like. However, when the amount of the fuel actually injected into each combustion chamber becomes excessive, the amounts of generation of soot and unburnt components increase so that the amount of smoke emitted from the internal combustion engine 1 will exceed an allowable range. Therefore, a maximum fuel injection amount, which is an upper limit for the amount of the fuel capable of being injected into each combustion chamber is beforehand set in such a manner that the amount of smoke emitted from the internal combustion engine 1 falls within the allowable range. As a result, the engine is controlled so that an amount of fuel greater than the maximum fuel injection amount can not be injected into each combustion chamber. The maximum fuel injection amount is calculated from a map unit based on the number of revolutions of the engine and the amount of intake air.

Here, since the generation of soot is suppressed in the low temperature combustion state, when the amount of intake air and the amount of injection fuel supplied to each combustion chamber are the same at the times of low temperature combustion and ordinary combustion, the amount of smoke emitted from the engine at the time of the low temperature combustion is less than that at the time of the ordinary combustion. That is, it is possible to inject a greater amount of fuel into each combustion chamber at the time of the low temperature combustion than that at the time of the ordinary combustion while keeping the amount of smoke emitted within the allowable range. Accordingly, the ECU 35 in this embodiment includes a low temperature combustion map and an ordinary combustion map which are separately provided as the map unit for calculating the maximum fuel injection amount. Assuming that the amount of the intake air supplied to each combustion chamber is the same at the times of low temperature combustion and ordinary combustion, the maximum fuel injection amount is set to be greater at the time of the low temperature combustion than at the time of the ordinary combustion.

Therefore, according to the combustion control apparatus for an internal combustion engine in this embodiment, since the maximum fuel injection amount can be set to appropriate values corresponding to the respective combustion states, it is possible to inject as much fuel as possible into each combustion chamber while preventing the injection of an excessive amount of fuel into each combustion chamber. As a result, the respective combustion states can be made more suitable, so that it is possible not only to suppress the amount of smoke emitted from the engine, but also to obtain acceleration performance capable of better meeting driver's requirements.

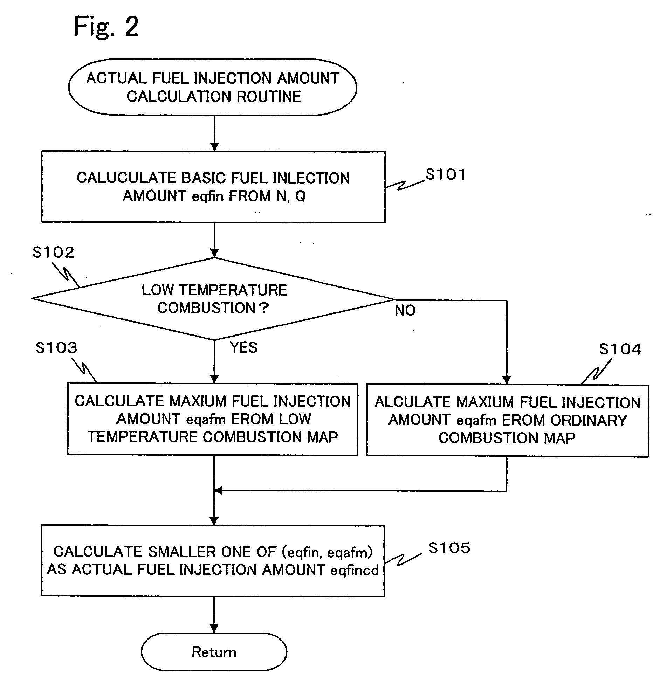

Now, reference will be made to an actual fuel injection amount calculation routine in this embodiment for calculating an amount of fuel actually injected into each combustion chamber of the internal combustion engine 1 while referring to a flowchart shown in Fig. 2.

The flow chart in Fig. 2 illustrates the actual fuel injection amount calculation routine according to this embodiment. This actual fuel injection amount calculation routine is repeatedly executed by means of the ECU 35 at every predetermined time interval (e.g., whenever the crank position sensor 33 outputs a pulse signal), and it is stored in advance in the ROM of the ECU 35.

In this routine or control flow, first in step S101, the ECU 35 calculates a basic amount of injection fuel eqfin based on the number of revolutions N of the engine and the degree of opening Q of the accelerator pedal.

Then, the control flow advances to step S102 where the ECU 35 determines whether the internal combustion engine 1 is operated in the low temperature combustion state.

When it is determined in S102 that the internal combustion engine 1 is operated in the low temperature combustion state, the control flow advances to step S103 where the ECU 35 calculates a maximum fuel injection amount eqafm from the low temperature combustion map, which has been stored beforehand in the ROM of the ECU 35, based on the number of revolutions N of the engine and the amount of intake air E. After the calculation of the maximum fuel injection amount eqafm, the control flow advances to step S105.

On the other hand, when it is determined in step S102 that the internal combustion engine 1 is not operated in the low temperature combustion state, i.e., that the internal combustion engine 1 is operated in the ordinary combustion state, the control flow advances to step S104 where the ECU 35 calculates a maximum fuel injection amount eqafm from the ordinary combustion map, which has been stored beforehand in the ROM of the ECU 35, based on the number of revolutions N of the engine and the amount of intake air E. After the calculation of the maximum fuel injection amount eqafm, the control flow advances to step S105.

In step S105, the ECU 35 makes a comparison between the basic amount of injection fuel eqfin calculated in step S101 and the maximum fuel injection amount eqafm calculated in step S103 or S104, calculates the smaller one of them as an actual amount of injection fuel eqfincd, and completes the execution of this routine.

Thus, according to this actual fuel injection amount calculation routine, it is possible to make the amount of fuel actually injected into each combustion chamber as much as possible while keeping the amount of smoke to be emitted within the allowable range.

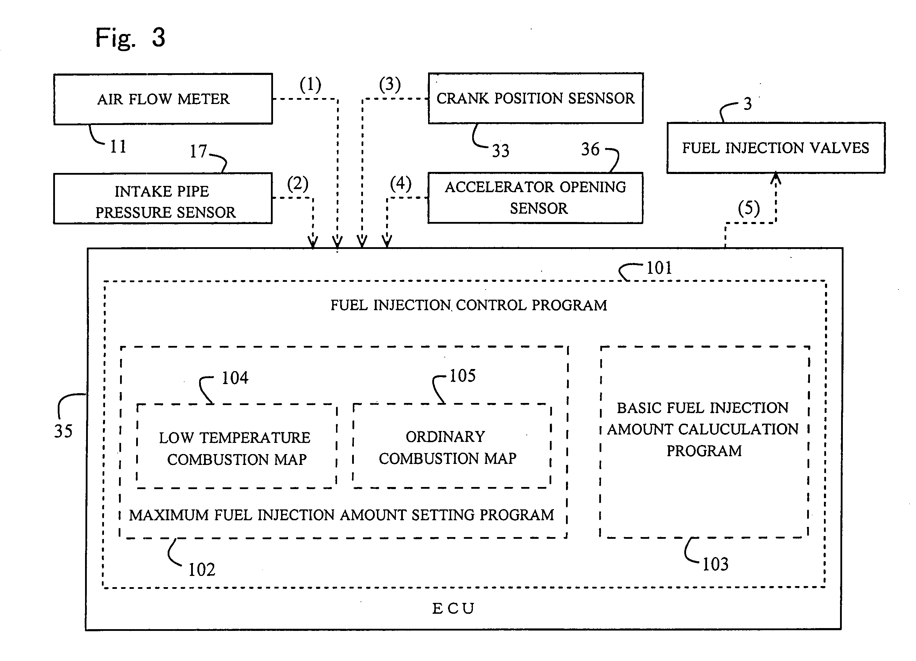

Here, reference will be made to the flow of signals around the ECU 35 in this embodiment while referring to Fig. 3. In Fig. 3, broken line arrows (1), (2), (3) and (4) represent the flow of signals from the air flow meter 11, the intake pipe pressure sensor 17, the crank position sensor 33 and the accelerator opening sensor 36 to the ECU 35, respectively, and broken line arrow (5) represents the flow of a signal from the ECU 35 to the fuel injection valves 3. The ECU 35 calculates the number of revolutions N of the engine from the output signal of the crank position sensor 33, and also calculates the amount of intake air E from the output signals of the air flow meter 11 and the intake pipe pressure sensor 17, as mentioned above.

A fuel injection amount control program 101 for calculating the amount of fuel to be injected into each combustion chamber is stored in the ECU 35, and includes a maximum fuel injection amount setting program 102 for setting the maximum fuel injection amount eqafm, and a basic fuel injection amount calculation program 103 for calculating the basic amount of injection fuel eqfin.

When the maximum fuel injection amount setting program 102 is executed, the maximum fuel injection amount eqafm is calculated and set by assigning the number of revolutions N of the engine and the amount of intake air E into either one of the low temperature combustion map 104 and the ordinary combustion map 105 stored in the ECU 35. Also, when the basic fuel injection amount calculation program 103 is executed, the basic amount of injection fuel eqfin is calculated from the number of revolutions N of the engine and the degree of opening Q of the accelerator pedal. That is, the maximum fuel injection amount setting program 102 constitutes a maximum fuel injection amount setting part according to the present invention, and the basic fuel injection amount calculation program 103 constitutes a basic fuel injection amount calculation part according to the present invention.

Thus, the calculation of the actual amount of injection fuel eqfincd is carried out by the execution of the fuel injection amount control program 101 including the maximum fuel injection amount setting program 102 and the basic fuel injection amount calculation program 103, as stated above. Further, the fuel injection valves 3 are controlled so as to adjust the amount of fuel to be injected into each combustion chamber to be the actual amount of injection fuel eqfincd. That is, the fuel injection amount control program 101 constitutes a fuel injection amount control part according to the present invention.

Although in the above description, the internal combustion engine 1 is a multi-cylinder internal combustion engine, the present invention is of course applied to a single-cylinder internal combustion engine having a single cylinder, too.

According to a combustion control apparatus and a combustion control method for an internal combustion engine constructed in accordance with the present invention, in the internal combustion engine that selectively switches a low temperature combustion state and an ordinary combustion state, it is possible to suppress the amount of smoke emitted from the engine and at the same time to obtain acceleration performance which is able to better meet driver's requirements.

While the invention has been described in terms of a preferred embodiment, those skilled in the art will recognize that the invention can be practiced with modifications within the spirit and scope of the appended claims.

In an internal combustion engine capable of selectively switching between a low temperature combustion state and an ordinary combustion state, a combustion control apparatus can suppress an amount of smoke emitted from the engine to the ambient atmosphere, and at the same time provide acceleration performance to better meet driver's requirements. The apparatus includes a map unit for calculating a maximum fuel injection amount, which is an upper limit for the amount of fuel being able to be injected into a combustion chamber, and the map unit comprises a low temperature combustion map used at the time of low temperature combustion and an ordinary combustion map used at the time of ordinary combustion, these maps being provided separately from each other.

## Claims

1. A combustion control apparatus for an internal combustion engine in which a low temperature combustion state, in which the generation of soot is suppressed by increasing an amount of burnt gas components in a combustion chamber of said engine more than that at the time when an amount of soot generated becomes a maximum due to the burnt gas components in said combustion chamber being increased, and an ordinary combustion state, which is other than the low temperature combustion state, can be selectively switched, **characterized by**:
a fuel injection amount control part (101) that controls an amount of injection fuel to be injected into said combustion chamber; and
a maximum fuel injection amount setting part (102) that sets a maximum fuel injection amount (eqafm), which is an upper limit for the amount of injection fuel controlled by said fuel injection amount control part (101) in such a manner that an amount of smoke to be emitted from said engine falls within an allowable range;
wherein said maximum fuel injection amount setting part (102) sets said maximum fuel injection amount (eqafm) to be different values at the time of low temperature combustion and at the time of ordinary combustion, respectively.

2. The combustion control apparatus for an internal combustion engine as set forth in claim 1, **characterized in that** when an amount of intake air (E) supplied to said combustion chamber is the same at the times of low temperature combustion and ordinary combustion, said maximum fuel injection amount setting part (102) sets said maximum fuel injection amount to be greater at the time of low temperature combustion than at the time of ordinary combustion.

3. The combustion control apparatus for an internal combustion engine as set forth in claim 1 or 2, **characterized in that** said maximum fuel injection amount setting part (102) calculates said maximum fuel injection amount (eqafm) from a map unit based on the number of revolutions (N) of said engine (1) and an amount of intake air (E) supplied to said combustion chamber.

4. The combustion control apparatus for an internal combustion engine as set forth in claim 3, **characterized in that** said map unit comprises a low temperature combustion map (104) used at the time of low temperature combustion and an ordinary combustion map (105) used at the time of ordinary combustion, said maps (104, 105) being provided separately from each other.

5. The combustion control apparatus for an internal combustion engine as set forth in any of claims 1 through 4, further **characterized by** a basic fuel injection amount calculation part (103) that calculates a basic amount of fuel (eqfin) to be injected into said combustion chamber based on the number of revolutions (N) of said engine (1) and the degree of opening (Q) of an accelerator pedal, wherein a comparison is made between said basic fuel injection amount (eqfin) calculated by said basic fuel injection amount calculation part (103) and said maximum fuel injection amount (eqafm), so that a smaller one of them is set as an actual fuel injection amount (eqfincd) which is an amount of fuel to be actually injected into said combustion chamber.

6. The combustion control apparatus for an internal combustion engine as set forth in any of claims 1 through 5, **characterized in that** said internal combustion engine (1) comprises a diesel engine having a common rail (4).

7. A combustion control method for an internal combustion engine in which a low temperature combustion state, in which the generation of soot is suppressed by increasing an amount of burnt gas components in a combustion chamber of said engine more than that at the time when an amount of soot generated becomes a maximum due to the burnt gas components in said combustion chamber being increased, and an ordinary combustion state, which is other than the low temperature combustion state, can be selectively switched, **characterized by** the steps of:
calculating a basic amount of fuel (eqfin) to be injected into said combustion chamber based on the number of revolutions (N) of said engine (1) and the degree of opening (Q) of an accelerator pedal;
determining whether said internal combustion engine (1) is in a low temperature combustion state or in an ordinary combustion state;
setting a maximum fuel injection amount (eqafm), which is an upper limit for the amount of fuel to be injected into said combustion chambers, to be different values at the time of low temperature combustion and at the time of ordinary combustion based on the number of revolutions (N) of said engine (1) and an amount of intake air (E) supplied to said combustion chamber; and
making a comparison between said basic fuel injection amount (eqfin) and said maximum fuel injection amount (eqafm) thereby to set a smaller one of them as an actual fuel injection amount (eqfincd) which is an amount of fuel to be actually injected into said combustion chamber.
